# EUROPÄISCHE PATENTSCHRIFT

(11) **EP 2 375 094 B1**
(45) Veröffentlichungstag und Bekanntmachung des Hinweises auf die Patenterteilung: **19.09.2012**
(21) Anmeldenummer: 11158756.4
(22) Anmeldetag: 18.03.2011
(51) Int. Cl.: F16D 48/06

(54) **Korrekturverfahren für eine Kupplungsaktuatorkennlinie**
Method for correcting a coupling actuator characteristic curve
Procédé de correction pour une ligne d'actionneur de couplage

(30) Priorität: 06.04.2010 DE 102010014383
(43) Veröffentlichungstag der Anmeldung: 12.10.2011
(73) Patentinhaber: GETRAG Getriebe- und Zahnradfabrik Hermann Hagenmeyer GmbH & Cie KG, 74199 Untergruppenbach (DE)
(72) Erfinder: Trutschel, Ralf, 34311 Naumburg (DE); Stepper, Thorsten, 74638 Waldenburg (DE); Pawlenka, Andreas, 74613 Öhringen (DE)
(74) Vertreter: Witte, Weller & Partner

(56) Entgegenhaltungen:
- EP-A1- 2 221 511
- DE-A1-102005 052 716
- US-A1- 2006 293 147

## Beschreibung

Die vorliegende Erfindung betrifft ein Verfahren zum Korrigieren einer Aktuatorkennlinie eines Kupplungsaktuators für eine Reibkupplung eines Fahrzeuggetriebes. Gattungsgemäße Verfahren sind aus EP-2221511, US-2006/293147 und DE-102005052716 bekannt.

Moderne Fahrzeuggetriebe wie automatisierte Schaltgetriebe, Doppelkupplungsgetriebe und Wandlerautomatgetriebe weisen automatisiert betätigte Reibkupplungen auf. Beispielsweise weisen Doppelkupplungsgetriebe zwei Reibkupplungen auf, die jeweils einem Teilgetriebe zugeordnet sind und in überschneidender Art und Weise betätigt werden können, um Gangwechsel ohne Zugkraftunterbrechung durchführen zu können. Die Reibkupplungen werden dabei von jeweiligen Kupplungsaktuatoren betätigt, die als elektrische oder hydraulische Aktuatoren ausgebildet sein können.

Die Reibkupplung wird beispielsweise über den Kupplungsdruck geregelt. Die Ansteuerung des Kupplungsaktuators erfolgt in der Regel jedoch über eine andere Größe, wie beispielsweise den elektrischen Strom, der zum Ansteuern eines elektronischen Druckregelventils oder eines elektromotorischen oder elektromagnetischen Aktuators benötigt wird.

Bei der Fertigung derartiger Fahrzeuggetriebe erfolgt am Ende ein fahrzeugspezifisches Einlernen, das eine erste Sollgröße wie einen Kupplungssolldruck in Beziehung zu einer zweiten Sollgröße wie einem Aktuatorsollstrom setzt. Hierbei wird der gesamte Stellbereich stufenweise durchfahren und anschließend iterativ ergänzt.

Im Betrieb werden Änderungen des Kupplungsaktuators, beispielsweise Änderungen eines hydraulischen Kreises zur Betätigung der Reibkupplung abgeschätzt. Diese Abschätzung ist jedoch häufig ungenau.

Vor diesem Hintergrund ist es eine Aufgabe der Erfindung, ein Verfahren zum Korrigieren einer Aktuatorkennlinie eines Kupplungsaktuators für eine Reibkupplung eines Fahrzeuggetriebes nach dessen Inbetriebnahme anzugeben.

Diese Aufgabe wird durch ein Verfahren zum Korrigieren einer Aktuatorkennlinie gemäß Anspruch 1 gelöst.

Bei dem erfindungsgemäßen Verfahren wird nach Inbetriebnahme des Fahrzeugs, also beispielsweise bei Wartungsarbeiten oder auch zyklisch während des normalen Betriebs, die vorab eingelernte Aktuatorkennlinie korrigiert.

Der Begriff der Aktuatorkennlinie ist vorliegend breit zu verstehen und soll sowohl einfache Kennlinien wie auch Kennfelder umfassen. Ferner kann die Aktuatorkennlinie Hystereseerscheinungen berücksichtigen.

Die Korrektur der Aktuatorkennline erfolgt dadurch, dass ein quasistationärer Betriebspunkt der Reibkupplung angefahren wird. Dies kann wie gesagt bei Wartungsarbeiten erfolgen oder auch im normalen Betrieb.

Sobald der quasistationäre Betriebspunkt erreicht ist, wird eine Abweichung zwischen der ersten Sollgröße wie beispielsweise einem Kupplungssolldruck und einer Istgröße der Reibkupplung wie beispielsweise einem Kupplungsistdruck erfasst. Eine solche Abweichung kann beispielsweise im Laufe des Betriebs des Fahrzeugs aufgrund von Alterungserscheinungen des Kupplungsaktuators auftreten.

Die Abweichung wird anschließend dazu verwendet, um eine Korrekturfunktion für die Aktuatorkennlinie einzurichten.

Demzufolge kann die Aktuatorkennlinie im Betrieb korrigiert werden. Dies hat eine hohe statische und dynamische Stellgenauigkeit der offenen Regelstrecke zur Folge. Die Zeitdauer, die die geschlossene Regelstrecke zur Ausregelung maximaler Abweichungen benötigt, sinkt dadurch deutlich. Zudem ist der nichtlineare Charakter der überlagerten Druckregelung geringer ausgeprägt, wodurch die Auslegung und Absicherung vereinfacht werden. Der Druckregler kann unter Umständen aggressiver "bedatet" werden, als es bei größeren Aussteuerbereichen z.B. aus Gründen der Robustheit möglich wäre. Das Ergebnis ist eine höhere Dynamik und eine geringere Steuerung der Regeldynamik, insbesondere im Adaptionsgebiet.

Die Aufgabe wird somit vollkommen gelöst.

Die erste Sollgröße ist vorzugsweise der Reglerausgang eines Reglers, der die Reibkupplung aufgrund einer Regelabweichung zwischen einem übergeordneten Sollwert und einem Istwert regelt. Der Reglerausgang ist in diesem Fall eine Art korrigierter Sollwert, der als Eingang für die Aktuatorkennlinie dient.

Vorzugsweise ist der Regler ein Druckregler eines hydraulischen Kupplungsaktuators, dessen Regelabweichung sich aufgrund einer Differenz zwischen einem übergeordneten Solldruck und einem Istdruck errechnet. Der Istdruck kann ein unmittelbar an der Reibkupplung gemessener Druck sein oder ein Wert sein, der aufgrund anderer Algorithmen aus anderen Parametern des Kupplungsaktuators abgeleitet wird.

Weitere Ausführungsformen des erfindungsgemäßen Korrekturverfahrens finden sich in den Unteransprüchen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Systems zum Regeln eines Kupplungsdruckes einer Reibkupplung eines Fahrzeuggetriebes;
- Fig. 2: eine beispielhafte Ausführungsform einer Korrekturfunktion;
- Fig. 3: ein Diagramm von Druck über Zeit zur Darstellung einer Ausführungsform einer Adaptionsroutine zum Einrichten der Korrekturfunktion; und
- Fig. 4: ein Diagramm von Druck über Zeit zur Darstellung einer alternativen Ausführungsform einer Adaptionsroutine zur Einrichtung der Korrekturfunktion.

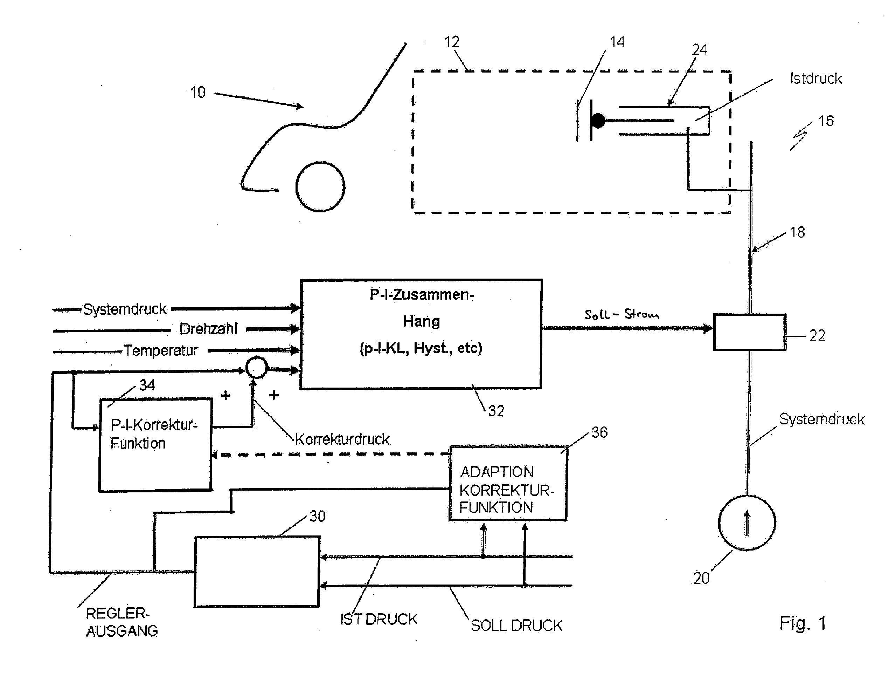

In Fig. 1 ist ein Fahrzeug wie ein Personenkraftwagen schematisch mit 10 bezeichnet. Das Fahrzeug 10 weist ein Fahrzeuggetriebe 12 wie ein Doppelkupplungsgetriebe auf. Ferner beinhaltet das Fahrzeuggetriebe 12 wenigstens eine Reibkupplung 14, im Falle eines Doppelkupplungsgetriebes zwei parallele Reibkupplungen 14, von denen nur eine dargestellt ist.

Zur automatisierten Betätigung der Reibkupplung 14 dient eine Kupplungsaktuatoranordnung 16. Die Kupplungsaktuatoranordnung 16 beinhaltet einen Hydraulikkreis 18 mit einer Pumpe 20 zum Bereitstellen eines Systemdruckes und einem elektronisch ansteuerbaren Druckregelventil 22, das einen Istdruck für einen Hydraulikzylinder 24 zum Betätigen der Reibkupplung 14 erzeugt.

Zum Regeln des Istdruckes dient ein Regler 30. Der Regler 30 erhält als Eingang den Istdruck sowie einen übergeordneten Solldruck, der beispielsweise von einer Getriebesteuerung bereitgestellt wird.

Der Regler 30 kann ein beliebiger Regler sein, beispielsweise ein PI-Regler oder dergleichen. Der Ausgang des Reglers 30 ist im Grunde eine Art geregelter Solldruck, der durch weitere Maßnahmen kompensiert sein kann. Der Reglerausgang wird einer Aktuatorkennlinie 32 eingegeben, die einen Zusammenhang zwischen einer ersten Sollgröße und einer zweiten Sollgröße herstellt, im vorliegenden Fall einen Zusammenhang zwischen dem geregelten Solldruck in Form des Reglerausgangs und einem Sollstrom, der zur Ansteuerung des Druckregelventils 22 dient.

Die Aktuatorkennlinie 32 wird in der Regel am Ende der Fertigung des Fahrzeugs 10 fahrzeugspezifisch eingelernt, indem beispielsweise der gesamte Stellbereich stufenförmig durchfahren wird und dazwischen liegende Werte anschließend iterativ bestimmt werden.

Vorliegend ist gezeigt, dass in die Aktuatorkennlinie 32 auch der Systemdruck, eine Drehzahl der Reibkupplung 14 und/oder eine Temperatur eingegeben werden. Diese Parameter können auch alternativ vorab zur Kompensation berechnet und dem Reglerausgang hinzuaddiert bzw. hiervon subtrahiert werden.

Im Laufe des Betriebs des Fahrzeugs kommt es zu Alterungserscheinungen beispielsweise des Hydraulikkreises 18 (Verschleiß von Ventilen, Leckagen etc.)

Hierdurch kann es vorkommen, dass die Aktuatorkennlinie 32 im Laufe des Betriebs des Fahrzeugs nicht mehr korrekt ist.

Um die Aktuatorkennlinie 32 zu korrigieren, ist eine Korrekturfunktion 34 vorgesehen, die anhand des Reglerausgangs einen Korrekturdruck erzeugt, der dem Reglerausgang hinzuaddiert wird.

Die Korrekturfunktion 34 wird im Betrieb (also bei Wartungsarbeiten oder auch zyklisch) angepasst, und zwar durch eine Adaptionsroutine 36. Die Adaptionsroutine 36 wird beispielsweise zyklisch aufgerufen, um den aktuellen Korrekturbedarf festzustellen. Dies erfolgt, indem ein quasistationärer Betriebspunkt der Reibkupplung 14 angefahren wird und indem anschließend eine Abweichung zwischen dem Reglerausgang und dem Istdruck erfasst wird. Diese Abweichung dient dann als Maß zum Einrichten bzw. Adaptieren der Korrekturfunktion.

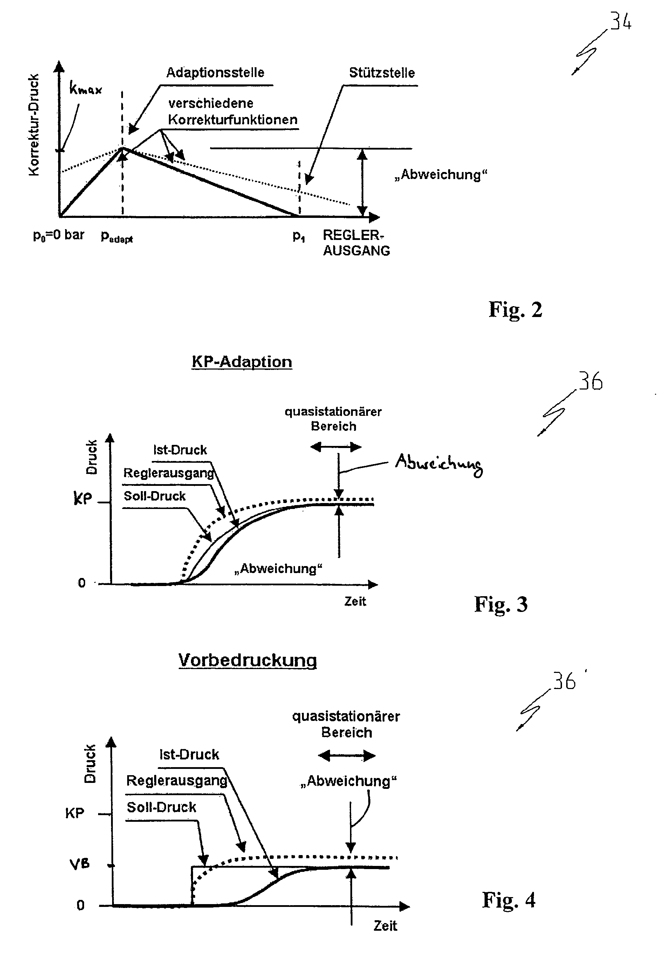

Fig. 2 zeigt eine beispielhafte Darstellung eines Diagramms einer Korrekturfunktion 34. In der Korrekturfunktion 34 wird ein Korrekturdruck in Abhängigkeit vom Reglerausgang erzeugt.

Die Funktion des Korrekturdrucks weist einen maximalen Korrekturwert Kₘₐₓ auf, den die Korrekturfunktion bei einem Reglerausgangswert aufweist, für den die Korrekturfunktion adaptiert worden ist, d.h. bei p_{adapt}. Ausgehend von diesem maximalen Korrekturwert verringert sich der Korrekturdruck hin zu niedrigeren und zu höheren Werten des Reglerausgangs. Mit anderen Worten wird das Korrekturmaß am Adaptionspunkt höher, an den weiter davon weg liegenden Arbeitspunkten geringer gewichtet. Es ist zu erkennen, dass bei einem Reglerausgang von 0 bar der Korrekturdruck ebenfalls 0 beträgt. Ferner beträgt der Korrekturdruck bei einer Stützstelle p₁ ebenfalls 0 bar. Der Korrekturdruck kann jedoch an diesen Stellen auch mehr als 0 bar betragen.

Ferner ist es möglich, weitere Korrekturwerte an anderen Arbeitspunkten zur Verfügung zu stellen. In diesem Fall können komplexere Korrekturfunktionen erzeugt werden, die die Genauigkeit in einem größeren Wertebereich erhöhen.

Der maximale Korrekturwert Kₘₐₓ, entspricht einer "Abweichung", die durch die Adaptionsroutine 36 bestimmt wird.

Die Fig. 3 und 4 zeigen derartige Adaptionsroutinen 36, 36'.

Bei der Adaptionsroutine 36 der Fig. 3 wird ein quasistationärer Betriebspunkt KP der Reibkupplung angefahren, der einem Eingriffspunkt der Reibkupplung (= Kisspoint) entspricht. Dabei wird der quasistationäre Betriebspunkt von einem Anfangswert aus monoton steigend angefahren, um Hystereseprobleme zu vermeiden. Der Anfangswert ist vorzugsweise 0.

Der quasistationäre Betriebspunkt ist vorzugsweise ein Arbeitspunkt der Reibkupplung, bei dem hohe Genauigkeitsanforderungen vorhanden sind. Dies ist beispielsweise der Eingriffspunkt der Reibkupplung.

Sobald der quasistationäre Betriebspunkt erreicht ist, wird eine Abweichung zwischen dem Reglerausgang und dem Istdruck der Reibkupplung ermittelt. Diese Abweichung wird zur Adaption der Korrekturfunktion 34 verwendet und entspricht vorzugsweise dem maximalen Korrekturwert Kₘₐₓ.

In Fig. 4 ist eine alternative Adaptionsroutine 36' gezeigt, bei der der quasistationäre Betriebspunkt VB angefahren wird, der einer Vorbefüllung der Kupplung (d.h. einem Vorbereitungszustand) entspricht. Der Druckwert VB ist kleiner als der Druckwert KP. Wie im Falle der Fig. 3 wird zur Adaption der Korrekturfunktion 34 eine Abweichung zwischen dem Reglerausgang und dem Istdruck ermittelt.

Generell ist zusätzlich Folgendes anzumerken:

Die Ermittlung der Abweichung zwischen einer aktuellen und einer eingelernten Aktuatorkennlinie erfolgt vorzugsweise ähnlich wie bei der Beendigung der Fertigung ("End Of Line, EOL") an quasistationären Betriebspunkten. Vorzugsweise wird ein solcher Betriebspunkt angefahren, es können jedoch auch mehrere Betriebspunkte angefahren werden. In jedem Fall sollte der Betriebspunkt von unten kommend monoton steigend erreicht werden, um eine Verfälschung durch Hystereseeffekte auszuschließen. Quasistationäre Bedingungen liegen dann vor, wenn die Änderungen der Regelgröße Druck, also des Istdruckes, über eine gewisse Zeitdauer praktisch keine Dynamik mehr aufweisen. Die in der Adaptionsroutine 36 ermittelte Abweichung kann unmittelbar als maximaler Korrekturwert Kₘₐₓ. eingegeben werden. Alternativ ist es möglich, den Verlauf der Abweichung zu filtern und in einen einzelnen Wert zu verdichten, der dann als maximaler Korrekturwert Kₘₐₓ herangezogen wird.

Da die Genauigkeitsanforderungen im unteren Druckbereich insbesondere ab Beginn der Momentenübertragung der Reibkupplung am höchsten sind, sollte die Abweichung in diesem Bereich ermittelt werden. Dazu bietet sich ein Adaptions-Betriebspunkt an, der genau am Eingriffspunkt der Reibkupplung oder unterhalb dieses Wertes liegt. Als ein Wert unterhalb des Eingriffspunktes bietet sich an, die sog. Vorbedruckung der Kupplung heranzuziehen, also ein Zustand, der in der Getriebesteuerung ohnehin vorhanden ist und sich leicht ansteuern lässt (wie auch der Eingriffspunkt). Die Vorbedruckung entspricht einem Zustand, bei dem die Kupplung quasi in Bereitschaft versetzt wird, jedoch noch kein Moment überträgt.

Die Korrekturfunktion wird in Abhängigkeit von der Abweichung angepasst. Ist die Abweichung positiv, wird der maximale Korrekturwert erhöht, ist die Abweichung negativ, wird der maximale Korrekturwert verringert. Sinnvoll ist es dabei, die Schrittweite zu begrenzen.

## Patentansprüche

1. Verfahren zum Korrigieren einer Aktuatorkennlinie (32) eines Kupplungsaktuators (16) für eine Reibkupplung (14) eines Fahrzeuggetriebes (12), wobei die Aktuatorkennlinie (32) als erste Sollgröße einen Kupplungssolldruck in Beziehung zu einem Aktuatorsollstrom als zweiten Sollgröße setzt, mit den Schritten:
- Anfahren eines quasistationären Betriebspunktes (KP; VB) der Reibkupplung (14);
- Erfassen einer Abweichung zwischen der ersten Sollgröße und einer Istgröße der Reibkupplung (14); und
- Einrichten einer Korrekturfunktion (34) für die Aktuatorkennlinie (32) in Abhängigkeit von der Abweichung,
**dadurch gekennzeichnet, dass** das Fahrzeuggetriebe ein Doppelkupplungsgetriebe (12) ist und das Korrekturverfahren nach dessen Inbetriebnahme zyklisch während des Betriebs jeweils für die inaktive Reibkupplung durchgeführt wird.

2. Verfahren nach Anspruch 1, wobei der quasistationäre Betriebspunkt (KP; VB) von einem Anfangswert monoton steigend angefahren wird.

3. Verfahren nach Anspruch 1 oder 2, wobei der quasistationäre Betriebspunkt (KP; VB) einem Arbeitspunkt der Reibkupplung (14) mit hohen Genauigkeitsanforderungen entspricht.

4. Verfahren nach Anspruch 3, wobei der quasistationäre Betriebspunkt (KP; VB) einem Wert der ersten Sollgröße entspricht, bei dem die Reibkupplung (14) ihren Eingriffspunkt (KP) hat, oder einem darunterliegenden Wert.

5. Verfahren nach Anspruch 4, wobei die Reibkupplung (14) bei dem darunterliegenden Wert der ersten Sollgröße in einen Vorbereitungszustand (VB) versetzt wird.

6. Verfahren nach einem der Ansprüche 1-5, wobei die Korrekturfunktion (34) eine Funktion eines Korrekturwertes in Abhängigkeit von der ersten Sollgröße ist, der der ersten Sollgröße hinzuaddiert wird.

7. Verfahren nach Anspruch 6, wobei die Korrekturfunktion einen maximalen Korrekturwert (Kₘₐₓ) bei einem Adaptionswert (p_{adapt}) der ersten Sollgröße aufweist, der dem quasistationären Betriebspunkt entspricht.

8. Verfahren nach Anspruch 7, wobei der Korrekturwert für Werte der ersten Sollgröße oberhalb und/oder unterhalb des Adaptionswertes (p_{adapt}) geringer ist als der maximale Korrekturwert (Kₘₐₓ).

9. Verfahren nach einem der Ansprüche 1-8, wobei die zweite Sollgröße ein Aktuatorsollstrom für ein Druckregelventil (22) eines hydraulischen Kupplungsaktuators (16) ist.

## Claims

1. Method for correcting an actuator characteristic (32) of a clutch actuator (16) for a friction clutch (14) of a vehicle transmission (12), wherein the actuator characteristic (32) relates as a first desired variable a desired clutch pressure to a desired actuator current as a second desired variable, comprising the steps:
- approaching a quasi-steady-state operating point (KP; VB) of the friction clutch (14);
- detecting a deviation between the first desired variable and an actual variable of the friction clutch (14); and
- setting up a correction function (34) for the actuator characteristic (32) according to the deviation,
**characterized in that** the vehicle transmission is a dual clutch transmission (12) and the correction method is carried out, after the commissioning thereof, cyclically during operation in each case for the inactive friction clutch.

2. Method according to Claim 1, wherein the quasi-steady-state operating point (KP; VB) is approached from an initial value in a monotonically increasing manner.

3. Method according to Claim 1 or 2, wherein the quasi-steady-state operating point (KP; VB) corresponds to an operating point of the friction clutch (14) having high accuracy demands.

4. Method according to Claim 3, wherein the quasi-steady-state operating point (KP; VB) corresponds to a value of the first desired variable at which the friction clutch (14) has its engagement point (KP), or corresponds to a lower value.

5. Method according to Claim 4, wherein the friction clutch (14) is put into a preparatory state (VB) at the lower value of the first desired variable.

6. Method according to one of Claims 1 to 5, wherein the correction function (34) is a function of a correction value according to the first desired variable, said correction value being added to the first desired variable.

7. Method according to Claim 6, wherein the correction function has a maximum correction value (Kₘₐₓ) at an adaptation value (p_{adapt}) of the first desired variable, said correction value (Kₘₐₓ) corresponding to the quasi-steady-state operating point.

8. Method according to Claim 7, wherein the correction value for values of the first desired variable above and/or below the adaptation value (p_{adapt}) is smaller than the maximum correction value (Kₘₐₓ).

9. Method according to one of Claims 1 to 8, wherein the second desired variable is a desired actuator current for a pressure control valve (22) of a hydraulic clutch actuator (16).

## Revendications

1. Procédé pour corriger une courbe caractéristique d'actionneur (32) d'un actionneur d'accouplement (16) pour un accouplement à friction (14) d'une boîte de vitesses de véhicule (12), la courbe caractéristique d'actionneur (32) mettant en relation comme première grandeur de consigne une pression de consigne d'accouplement avec un courant de consigne d'actionneur comme deuxième grandeur de consigne, comprenant les étapes suivantes:
- atteinte d'un point de fonctionnement quasi-stationnaire (KP; VB) de l'accouplement à friction (14) ;
- détection d'un écart entre la première grandeur de consigne et une grandeur réelle de l'accouplement à friction (14) ; et
- réglage d'une fonction de correction (34) pour la courbe caractéristique d'actionneur (32) en fonction de l'écart,
**caractérisé en ce que** la boîte de vitesses de véhicule est une boîte de vitesses à double accouplement (12) et le procédé de correction est mis en oeuvre de manière cyclique pendant le fonctionnement après sa mise en service, à chaque fois pour l'accouplement à friction qui est inactif.

2. Procédé selon la revendication 1, selon lequel le point de fonctionnement quasi-stationnaire (KP; VB) est atteint avec une croissance monotone à partir d'une valeur de départ.

3. Procédé selon la revendication 1 ou 2, selon lequel le point de fonctionnement quasi-stationnaire (KP ; VB) correspond à un point de fonctionnement de l'accouplement à friction (14) avec des contraintes de précision élevées.

4. Procédé selon la revendication 3, selon lequel le point de fonctionnement quasi-stationnaire (KP ; VB) correspond à une valeur de la première grandeur de consigne à laquelle l'accouplement à friction (14) a son point de contact (KP), ou à une valeur inférieure à celle-ci.

5. Procédé selon la revendication 4, selon lequel l'accouplement à friction (14) est amené dans un état de préparation (VB) à la valeur inférieure à celle-ci de la première grandeur de consigne.

6. Procédé selon l'une des revendications 1 à 5, selon lequel la fonction de correction (34) est une fonction d'une valeur de correction en fonction de la première grandeur de consigne, laquelle est additionnée à la première grandeur de consigne.

7. Procédé selon la revendication 6, selon lequel la fonction de correction présente une valeur de correction maximale (Kₘₐₓ) à une valeur d'adaptation (p_{adapt}) de la première grandeur de consigne, laquelle correspond au point de fonctionnement quasi-stationnaire.

8. Procédé selon la revendication 7, selon lequel la valeur de correction pour les valeurs de la première grandeur de consigne au-dessus et/ou au-dessous de la valeur d'adaptation (p_{adapt}) est inférieure à la valeur de correction maximale (Kₘₐₓ).

9. Procédé selon l'une des revendications 1 à 8, selon lequel la deuxième grandeur de consigne est un courant de consigne d'actionneur pour une vanne régulatrice de pression (22) d'un actionneur d'accouplement hydraulique (16).
